# EUROPÄISCHE PATENTSCHRIFT

(11) **EP 4 435 196 B1**
(45) Veröffentlichungstag und Bekanntmachung des Hinweises auf die Patenterteilung: **23.09.2026**
(21) Anmeldenummer: 23163398.3
(22) Anmeldetag: 22.03.2023
(51) Int. Cl.: E04D 13/14

(54) **MONTAGEVORRICHTUNG**
MOUNTING DEVICE
DISPOSITIF DE MONTAGE

(43) Veröffentlichungstag der Anmeldung: 25.09.2024
(73) Patentinhaber: Geaplan Folien GmbH, 26188 Edewecht (DE)
(72) Erfinder: KROL, Stefan, 23843 Bad Oldesloe (DE)
(74) Vertreter: Jabbusch, Matthias

(56) Entgegenhaltungen:
- AU-A- 4 269 000
- DE-U- 1 974 845
- US-A- 4 467 581
- US-A- 5 407 313
- US-A1- 2006 179 725
- US-B1- 10 767 684

## Beschreibung

Die Erfindung betrifft eine Montagevorrichtung zur sicheren Abdichtung von Halteelementen und/oder Kabeldurchführungen, bei denen eine Durchdringung einer Dachoberfläche, insbesondere einer Dachfolie, notwendig ist, die Montagevorrichtung eine Grundplatte aufweist, die auf der Dachoberfläche aufliegt und mindestens eine Ausnehmung zur Aufnahme der Halteelemente und/oder Kabeldurchführungen aufweist, wobei die Grundplatte an der der Dachoberfläche zugewandten Seite mindestens eine ringförmige Profilierung am Außenrand aufweist, und eine innere ringförmige Profilierung an und um die Ausnehmungen aufweist und dass die Grundplatte eine Vorspannung aufweist, das heißt, der Abstand zu einem ebenen Untergrund von der inneren ringförmigen Profilierung nach der ringförmigen Profilierung am Außenrand abnimmt, so dass bei Verschraubung die Grundplatte sowohl mit der ringförmigen Profilierung am Außenrand als mit der inneren ringförmigen Profilierung gegen die Vorspannung auf die Dachoberfläche aufpressbar ist.

Eine solche gattungsgemäße Montagevorrichtung ist aus der US 5 407 313 A bekannt.

Eine weitere Montagevorrichtung ist aus der EP 2 721 354 B1 bekannt. Diese Dachmontagevorrichtung weist zwei miteinander verbindbare Teile auf, nämlich ein Basiselement mit einem Vorsprung, der sich durch das Dachdeckungsmaterial hindurch erstreckt und einen Deckel, der zur Aufnahme des Vorsprungs ausgebildet ist.

Der Erfindung liegt die Aufgabe zugrunde, eine gattungsgemäße Montagevorrichtung zu schaffen, mit der eine Trennung zwischen dem Haltepunkt, also der Durchdringung der Dachoberfläche und der sicheren Abdichtung der Dachoberfläche erreicht wird.

Bei einer Montagevorrichtung zur sicheren und abgedichteten Montage von Halteelementen und/oder Kabeldurchführungen, bei denen eine Durchdringung einer Dachoberfläche, insbesondere einer Dachfolie (14), notwendig ist, wobei die Dachmontagevorrichtung (1) eine Grundplatte (2) aufweist, die auf der Dachoberfläche aufliegt und mindestens eine Ausnehmung (3, 7) zur Aufnahme der Halteelemente und/oder Kabeldurchführungen aufweist, wobei die Grundplatte (2) an der der Dachoberfläche zugewandten Seite mindestens eine ringförmige Profilierung (4) am Außenrand (6) aufweist, und eine innere ringförmige Profilierung (20) an und um die Ausnehmung (13) aufweist, und dass die Grundplatte (2) eine Vorspannung (15) aufweist, das heißt, der Abstand zu einem ebenen Untergrund von der inneren ringförmigen Profilierung (20) nach der ringförmigen Profilierung (4) am Außenrand abnimmt, so dass bei Verschraubung die Grundplatte (2) sowohl mit der ringförmigen Profilierung (4) am Außenrand als mit der inneren ringförmigen Profilierung (20) gegen die Vorspannung auf die Dachoberfläche aufpressbar ist, wird dies erfindungsgemäß dadurch erreicht, dass die Grundplatte (2) mehrere außermittige Ausnehmungen (7) aufweist, deren Größe an den Durchmesser von Schrauben angepasst ist, wobei die außermittigen Ausnehmungen (7) durch Verschraubungen genutzt werden, die mindestens teilweise mit einem Dichtstoff (13) füllbar sind.
Dazu wird die Dichtigkeit der durchdrungenen Dachoberfläche über redundante Abdichtungsfunktionen der Montagevorrichtung risikoarm für Installateure ausgeführt. Die sichere Abdichtung und gleichzeitig die sichere Befestigung von Halteelementen speziell auf flach geneigten Dächern stellen bei allen bekannten Ausführungen die Schwachpunkte dar.

Die Montagevorrichtung weist eine Grundplatte auf, die auf der Dachoberfläche aufliegt und mindestens eine Ausnehmung zur Aufnahme der Halteelemente und/oder Kabeldurchführungen besitzt. Die sichere Abdichtung von Halteelementen und/oder Kabeldurchführungen mit einer Durchdringung der Dachoberfläche (insbesondere einer Dachfolie), wird erfindungsgemäß dadurch erreicht, dass die Grundplatte an der Dachoberfläche zugewandten Seite eine ringförmige Profilierung aufweist und dass die Grundplatte eine Vorspannung aufweist. Vorspannung bedeutet: Der Abstand zu einem ebenen Untergrund nimmt von innen nach außen ab.

Mit einer derartigen Montagevorrichtung können verschraubte Durchdringungen der Dachoberfläche für Solarpanels und andere Aufbauten sicher abgedichtet werden. Die Montagevorrichtung kann auch zur mechanischen Befestigung von Blitzableiterkabeln eingesetzt werden. Damit ist eine sichere, mechanische Befestigung von Bauteilen auf dem Dach möglich.

Bevorzugt ist die ringförmige Profilierung am Außenrand der Grundplatte angeordnet. Dadurch wird die gesamte Montagevorrichtung gegen das Eindringen von Feuchtigkeit geschützt, sobald sie gegen die Vorspannung der dachzugewandten Seite zur Dachabdichtung gepresst wird. Alternativ und/oder zusätzlich wird auch eine innere ringförmige Profilierung an der Grundplatte vorgesehen sein, die gegen die Vorspannung nach unten auf die Dachabdichtung gedrückt wird.

In einer anderen bevorzugten Ausgestaltung der Erfindung ist die Ausnehmung zur Aufnahme der Halteelemente und/oder Kabeldurchführungen eine zentrale Ausnehmung. Dadurch ist eine gleichmäßige Verteilung der Kräfte möglich. Wird die Montagevorrichtung in der zentralen Ausnehmung genutzt, wird die Grundplatte besonders mit der äußeren, ringförmigen Profilierung gegen die Vorspannung auf die Dachoberfläche gepresst und stellt so die erste Abdichtungsfunktion da. Denkbar sind jedoch auch außermittige Anordnungen bei speziellen Geometrien, die zu einer Seite ausgerichtet sind.

Erfindungsgemäß weist die Grundplatte mehrere außermittige Ausnehmungen auf. Diese sind bevorzugt gleichmäßig verteilt und führen dann ebenfalls zu einer gleichmäßigen Kraftverteilung.

Weiterhin ist es bevorzugt, dass die Dachmontagevorrichtung einen Flansch aufweist, der über der Grundplatte und unter der zentralen Montageeinrichtung positioniert ist und sich über die Grundplatte auf die Dachabdichtung hinaus erstreckt. Dadurch ist eine besonders zuverlässige Abdichtung ermöglicht, da der Flansch eine zusätzliche Abdichtungsfunktion gewährleistet.

Dabei sind die Ausnehmungen der Grundplatte mindestens teilweise mit einem Dichtstoff füllbar. Bei Ausfüllung der Ausnehmungen mit einem Dichtstoff kann dann auch keine Feuchtigkeit durch diese Ausnehmungen eintreten, an denen die Durchdringung der Dachoberfläche erfolgt sind. Auf diese Weise ist auch in dieser Hinsicht eine Abdichtungsfunktion zusätzlich zu den vorgenannten Funktionen gewährleistet.

Bevorzugt weist die zentrale Ausnehmung einen Vorsprung/Schaft mit einem Außengewinde auf. Auf dieses Außengewinde ist die zentrale Montageeinrichtung besonders zuverlässig aufschraubbar.

Zudem weist die zentrale Montageeinrichtung bevorzugt eine ringförmige Profilierung auf, die eine besonders gute und punktgenaue und damit kräftemäßig zuverlässige Abdichtung zwischen der zentralen Montageeinrichtung und dem Flansch gewährleistet.

Weiterhin weisen die außermittigen Ausnehmungen in einer bevorzugten Ausgestaltung ringförmige Profilierung auf, die ebenfalls zu einer besonders guten Abdichtung führen.

Nachfolgend wird die Erfindung anhand eines in der Zeichnung dargestellten Ausführungsbeispiels weiter erläutert. Im Einzelnen zeigen die schematischen Darstellungen in:
- Figur 1:: die zwei Komponenten einer Montagevorrichtung;
- Figur 2:: eine erste Ausführungsform einer erfindungsgemäßen Montagevorrichtung als Halteeinrichtung, Grundplatte und Kappe/Montageeinrichtung;
- Figur 3:: eine zweite Ausführungsform einer erfindungsgemäßen Montagevorrichtung als Kabeldurchführung oder Halter für Blitzableiter;
- Figur 4:: eine vergrößerte Darstellung eines Teils der Dachmontagevorrichtung gemäß Figur 3 zur Verdeutlichung einer Vorspannung und
- Figur 5:: Eine Ansicht einer Grundplatte von unten.

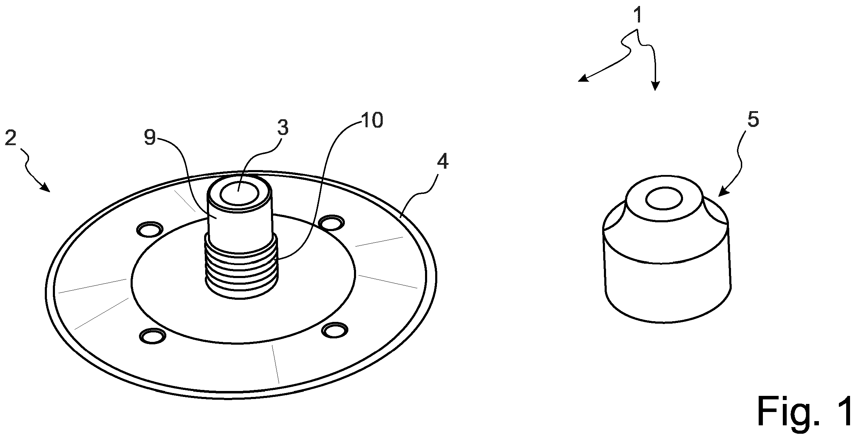

In Figur 1 sind die zwei Komponenten der Dachmontagevorrichtung dargestellt. Zum einen ist dies die im linken Teil der Figur dargestellte Grundplatte 2. Die Grundplatte 2 weist insbesondere einen zentralen Vorsprung 9 auf, in dessen Mitte eine Ausnehmung 3 vorgesehen ist. Der Außenrand des zentralen Vorsprungs 9 weist ein Außengewinde 10 auf. Die Grundplatte 2 weist zudem an seinem Außenrand eine ringförmige Profilierung 4 auf. Diese dient insbesondere auch zur Abdichtung auf dem Dach. Der rechte Teil der Figur 1 zeigt die zweite Komponente der Dachmontagevorrichtung 1, nämlich die zentrale Kappe/Montageeinrichtung 5. Diese hat ein nicht erkennbares Innengewinde, das auf das Außengewinde 10 des zentralen Vorsprungs/Schaftes 1 der Grundplatte 2 aufgeschraubt wird.

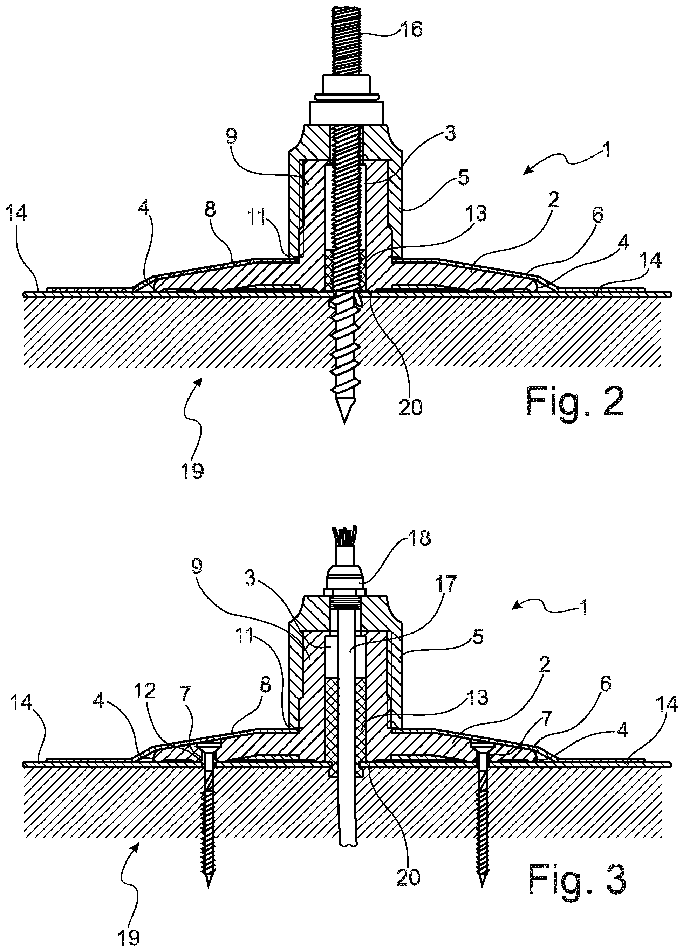

In Figur 2 ist eine erste Ausführungsform der Montagevorrichtung 1 dargestellt. Diese dient insbesondere zur Befestigung von weiteren Aufbauten wie Rahmen für Solarpanels oder anderen Aufbauten. Auf einem Dachaufbau 19 ist eine Dachabdichtungsbahn 14 aufgebracht, die den Dachaufbau insgesamt gegen das Eindringen von Feuchtigkeit schützt. Der Aufbau mit Halte- und/oder Befestigungspunkten durchdringt diese Dachabdichtungsbahn 14 und würde insofern zu der Gefahr führen bzw. ermöglichen, dass dort Feuchtigkeit eindringt. Dies wird mit Hilfe der Montagevorrichtung 1 verhindert. Die Montagevorrichtung 1 weist im Wesentlichen die in Figur 1 dargestellte Grundplatte 2 und die Kappe/Montageeinrichtung 5 auf. Die Grundplatte 2 weist eine zentrale Ausnehmung 3 auf, die sich durch die gesamte Grundplatte 2, einschließlich des zentralen Vorsprungs 9 erstreckt. Ebenso weist die Kappe/Montageeinrichtung 5 eine korrespondierende Ausnehmung auf, sodass eine Stockschraube 16 oder ein anderes Befestigungselement sich durch die zentrale Ausnehmung 3 hindurch erstrecken kann. Weiterhin ist als wesentliches Element der Dachmontagevorrichtung 1 ein Flansch 8 vorgesehen, der tellerartig ausgebildet ist und sich über die Grundplatte 2 hinaus erstreckt und bis an den zentralen Vorsprung 9 heranreicht. Im Bereich des Außenrandes 6 der Grundplatte 2 ist die ringförmige Profilierung 4 vorgesehen, die nach unten ausgerichtet ist und von dem Flansch 8 auf die Dachfolie oder Dachabdichtungsbahn 14 gedrückt wird, sodass dort ein Eindringen von Flüssigkeit verhindert wird. Die Kappe/Montageeinrichtung 5, die auf die Grundplatte 2 aufgeschraubt wird, weist in ihrem unteren Endbereich eine ringförmige Profilierung 11 auf. Dadurch wird ein punktförmiger und somit größerer Auflagedruck der Kappe/Montageeinrichtung 5 auf den Flansch 8 erreicht, sodass auch auf diese Weise das Eindringen von Wasser oder Feuchtigkeit über den Flansch 8 hinweg in die Dachmontagevorrichtung 1 verhindert wird. Als weitere und ergänzende Maßnahme, zur Verhinderung des Eindringens von Flüssigkeit, ist in der zentralen Ausnehmung 3, insbesondere im unteren Bereich der zentralen Ausnehmung 3, also im Bereich der Dachfolie 14, ein Dichtstoff 13 eingefüllt. Dieser dichtet die Abdichtungsbahn im Bereich der Stockschraube 16 oder anderer Halteelemente, die die Dachfolie 14 durchdringen, gegen Feuchtigkeit ab.

In Figur 3 ist ein zweites Ausführungsbeispiel der erfindungsgemäßen Dachmontagevorrichtung 1 dargestellt. Hier weist die Grundplatte 2 ebenfalls eine zentrale Ausnehmung 3 auf, jedoch ist hier keine Stockschraube oder eine ähnliche Befestigung vorgesehen, sondern hier wird ein Kabel 17 durch die zentrale Ausnehmung 3 hindurchgeführt, das ebenfalls die Dachfolie 4 durchdringt. Im Übrigen sind gleiche Teile mit gleichen Bezugszahlen gekennzeichnet, so dass insofern die oben gegebene Beschreibung zutrifft.

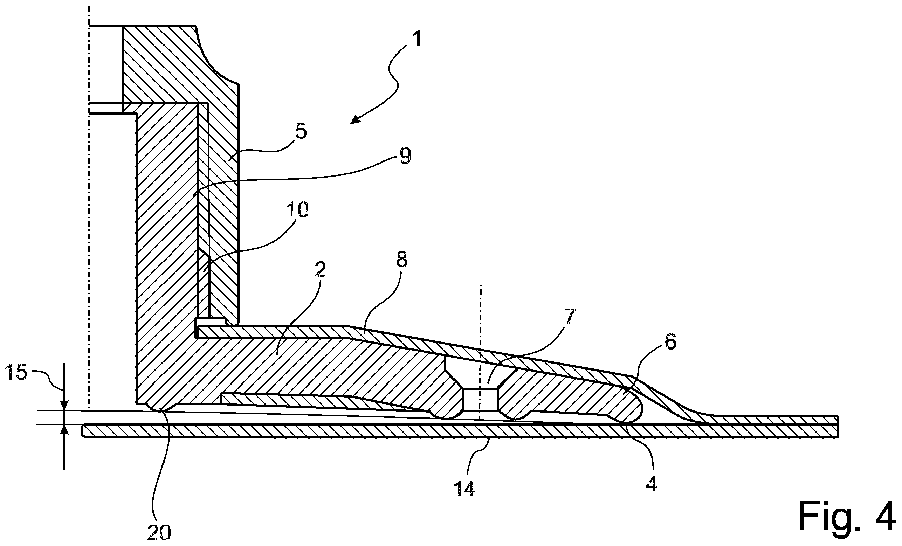

In Figur 4 ist eine vergrößerte Darstellung eines Teils der Dachmontagevorrichtung gemäß Figur 3 dargestellt. Hier ist mit 15 die Vorspannung verdeutlicht. Die Grundplatte 2 wird nach dem Aufschrauben der zentralen Montagevorrichtung 5 auf das Außengewinde 10 des zentralen Vorsprungs 9 bei der Verschraubung mit einer Stockschraube 16 nach unten gedrückt. Dadurch wird eine besonders gute und feste Abdichtung der ringförmigen Profilierung 4 im Außenbereich und auch der weiteren inneren ringförmigen Profilierung 20 erreicht.

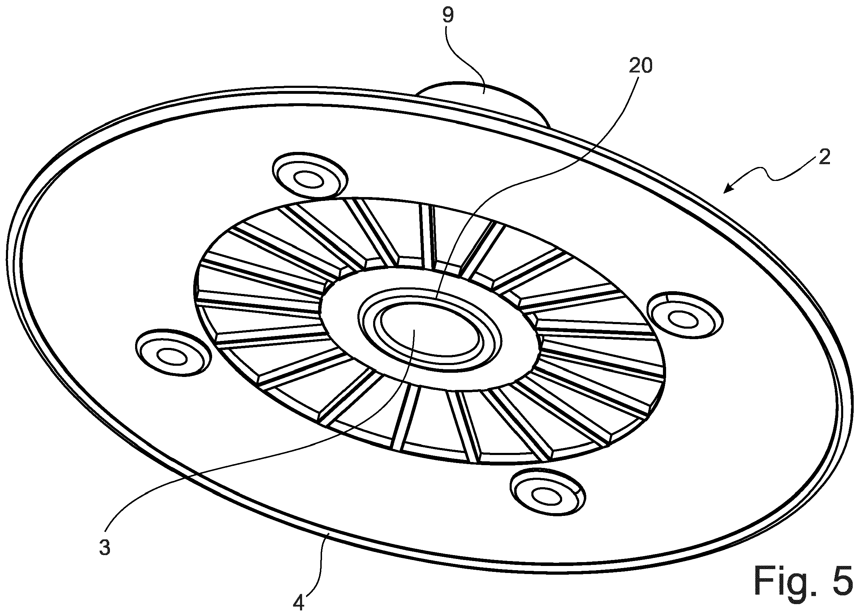

In Figur 5 ist eine Grundplatte 2 in einer Ansicht von unten dargestellt. Hier ist auch die ringförmige Profilierung 20 zu erkennen.

## Patentansprüche

1. Montagevorrichtung (1) zur sicheren und abgedichteten Montage von Halteelementen und/oder Kabeldurchführungen, bei denen eine Durchdringung einer Dachoberfläche, insbesondere einer Dachfolie (14), notwendig ist, wobei die Dachmontagevorrichtung (1) eine Grundplatte (2) aufweist, die auf der Dachoberfläche aufliegt und mindestens eine Ausnehmung (3, 7) zur Aufnahme der Halteelemente und/oder Kabeldurchführungen aufweist,
wobei
die Grundplatte (2) an der der Dachoberfläche zugewandten Seite mindestens eine ringförmige Profilierung (4) am Außenrand (6) aufweist, und eine innere ringförmige Profilierung (20) an und um die Ausnehmung (3) aufweist, und
dass die Grundplatte (2) eine Vorspannung (15) aufweist, das heißt, der Abstand zu einem ebenen Untergrund von der inneren ringförmigen Profilierung (20) nach der ringförmigen Profilierung (4) am Außenrand abnimmt, so dass bei Verschraubung die Grundplatte (2) sowohl mit der ringförmigen Profilierung (4) am Außenrand als mit der inneren ringförmigen Profilierung (20) gegen die Vorspannung auf die Dachoberfläche aufpressbar ist,
**dadurch gekennzeichnet,**
**dass** die Grundplatte (2) mehrere außermittige Ausnehmungen (7) aufweist, deren Größe an den Durchmesser von Schrauben angepasst ist, wobei die außermittigen Ausnehmungen (7) durch Verschraubungen genutzt werden können, und
wobei die außermittigen Ausnehmungen (7) mindestens teilweise mit einem Dichtstoff (13) füllbar sind.

2. Montagevorrichtung nach Anspruch 1, **dadurch gekennzeichnet, dass** die ringförmige Profilierung (4) an einem Außenrand (6) der Grundplatte (2) angeordnet ist.

3. Montagevorrichtung nach Anspruch 1, **dadurch gekennzeichnet, dass** die Ausnehmung eine zentrale Ausnehmung (3) ist.

4. Montagevorrichtung nach einem der vorhergehenden Schutzansprüche, **dadurch gekennzeichnet, dass** die Dachmontagevorrichtung (1) einen Flansch (8) aufweist, der über der gesamten Grundplatte (2) und unter einer zentralen Montageeinrichtung (5) positioniert ist und sich über die Grundplatte (2) hinaus erstreckt.

5. Montagevorrichtung nach einem der vorhergehenden Schutzansprüche, **dadurch gekennzeichnet, dass** die Ausnehmungen (7) der Grundplatte (2) mindestens teilweise mit einem Dichtstoff (13) füllbar sind.

6. Montagevorrichtung nach einem der vorhergehenden Schutzansprüche, **dadurch gekennzeichnet, dass** die Ausnehmungen (7) einen Vorsprung (12) mit einem Außengewinde aufweisen.

7. Dachmontagevorrichtung nach einem der vorhergehenden Schutzansprüche und nach Schutzanspruch 4, **dadurch gekennzeichnet, dass** die zentrale Montageeinrichtung eine ringförmige Profilierung (11) aufweist.

8. Dachmontagevorrichtung nach einem der vorhergehenden Schutzansprüche, **dadurch gekennzeichnet, dass** die außermittigen Ausnehmungen (7) ringförmige Profilierung (12) aufweisen.

9. Dachmontagevorrichtung nach einem der vorhergehenden Schutzansprüche, **dadurch gekennzeichnet, dass** die Grundplatte (2) eine innere ringförmige Profilierung (20) aufweist.

## Claims

1. A mounting device (1) for secure and sealed mounting of holding elements and/or cable bushings, in which a penetration of a roof surface, in particular a roof membrane (14), is necessary, wherein the roof mounting device (1) has a base plate (2) which rests on the roof surface and has at least one recess (3, 7) for accommodating the holding elements and/or cable bushings,
wherein
the base plate (2) has at least one annular profiled section (4) at the outer edge (6) on the side facing the roof surface, and has an inner annular profiled section (20) at and around the recess (3), and
wherein the base plate (2) has a prestress (15), that is to say the distance from a planar substrate decreases from the inner annular profiled section (20) to the annular profiled section (4) at the outer edge, so that when screwing down, the base plate (2) can be pressed down onto the roof surface against the prestress both using the annular profiled section (4) at the outer edge and using the inner annular profiled section (20),
**characterized**
**in that** the base plate (2) has a plurality of eccentric recesses (7); the size of which is adapted to the diameter of screws, wherein the eccentric recesses (7) can be used by screw connections, and wherein the eccentric recesses (7) can be at least partially filled with a sealant (13).

2. The mounting device according to Claim 1, **characterized in that** the annular profiled section (4) is arranged at an outer edge (6) of the base plate (2).

3. The mounting device according to Claim 1, **characterized in that** the recess is a central recess (3).

4. The mounting device according to any one of the preceding protective claims, **characterized in that** the roof mounting device (1) has a flange (8) which is positioned over the entire base plate (2) and under a central mounting device (5) and extends beyond the base plate (2).

5. The mounting device according to any one of the preceding protective claims, **characterized in that** the recesses (7) of the base plate (2) can be at least partially filled with a sealant (13).

6. The mounting device according to any one of the preceding protective claims, **characterized in that** the recesses (7) have a projection (12) with an external thread.

7. The roof mounting device according to any one of the preceding protective claims and according to protective claim 4, **characterized in that** the central mounting device has an annular profiled section (11).

8. The roof mounting device according to any one of the preceding protective claims, **characterized in that** the eccentric recesses (7) have an annular profiled section (12).

9. The roof mounting device according to any one of the preceding protective claims, **characterized in that** the base plate (2) has an inner annular profiled section (20) .

## Revendications

1. Dispositif de montage (1), destiné à un montage sûr et étanche d'éléments de maintien et / ou de traversées de câbles pour lesquels une pénétration d'une surface de toiture, notamment d'une membrane de toiture (14) est nécessaire, le dispositif de montage (1) sur toiture comportant une plaque de base (2) qui repose sur la surface de toiture et qui comporte au moins un évidement (3, 7), destiné à recevoir les éléments de maintien et / ou les traversées de câbles,
sur la face dirigée vers la surface de toiture, la plaque de base (2) comportant au moins un profilage (4) de forme annulaire sur le bord extérieur (6) et un profilage (20) intérieur de forme annulaire sur et autour de l'évidement (3) et la plaque de base (2) présentant une précontrainte (15), c'est-à-dire que l'écart par rapport à un support plan du profilage (20) intérieur de forme annulaire après le profilage (4) de forme annulaire sur le bord extérieur décroît, de sorte que lors d'un vissage, la plaque de base (2) puisse être pressée à l'encontre de la précontrainte sur la surface de toiture, aussi bien par le profilage (4) de forme annulaire sur le bord extérieur que par le profilage (20) intérieur de forme annulaire,
**caractérisé en ce que**
la plaque de base (2) comporte plusieurs évidements (7) excentrés, dont la taille est adaptée au diamètre de vis, les évidements (7) excentrés pouvant être utilisés par des vissages et les évidements (7) excentrés pouvant être remplis au moins partiellement avec un produit d'étanchéité (13).

2. Dispositif de montage selon la revendication 1, **caractérisé en ce que** le profilage (4) de forme annulaire est placé sur un bord extérieur (6) de la plaque de base (2).

3. Dispositif de montage selon la revendication 1, **caractérisé en ce que** l'évidement est un évidement (3) central.

4. Dispositif de montage selon l'une quelconque des revendications précédentes, **caractérisé en ce que** le dispositif de montage (1) sur toiture comporte une bride (8) qui est positionnée au-dessus de l'ensemble de la plaque de base (2) et sous un dispositif de montage (5) central et qui s'étend au-delà de la plaque de base (2).

5. Dispositif de montage selon l'une quelconque des revendications précédentes, **caractérisé en ce que** les évidements (7) de la plaque de base (2) peuvent être remplis au moins partiellement avec un produit d'étanchéité (13).

6. Dispositif de montage selon l'une quelconque des revendications précédentes, **caractérisé en ce que** les évidements (7) comportent une saillie (12), dotée d'un filetage.

7. Dispositif de montage sur toiture selon l'une quelconque des revendications précédentes et selon la revendication 4, **caractérisé en ce que** le dispositif de montage central comporte un profilage (11) de forme annulaire.

8. Dispositif de montage sur toiture selon l'une quelconque des revendications précédentes, **caractérisé en ce que** les évidements (7) excentrés comportent un profilage (12) de forme annulaire.

9. Dispositif de montage sur toiture selon l'une quelconque des revendications précédentes, **caractérisé en ce que** la plaque de base (2) comporte un profilage (20) intérieur de forme annulaire.
